# EUROPÄISCHE PATENTSCHRIFT

(11) **EP 0 873 255 B1**
(45) Veröffentlichungstag und Bekanntmachung des Hinweises auf die Patenterteilung: **12.12.2001**
(21) Anmeldenummer: 96946040.1
(22) Anmeldetag: 05.12.1996
(51) Int. Cl.: B60R 16/02

(54) **SCHALTUNGSANORDNUNG FÜR EIN KRAFTFAHRZEUG MIT FUNKTIONSMODULEN, DIE ÜBER WENIGSTENS ZWEI BUSSYSTEME MIT EINEM GEMEINSAMEN GATEWAY VERBUNDEN SIND**
CIRCUIT ARRANGEMENT FOR A VEHICLE HAVING FUNCTIONAL MODULES BEING CONNECTED TO A GATEWAY VIA AT LEAST TWO BUSSES
CIRCUITERIE POUR UN VEHICULE AYANT DES MODULES FONCTIONNELS CONNECTES A UN GATEWAY PAR AU MOINS DEUX BUS

(30) Priorität: 10.01.1996 DE 19600644
(43) Veröffentlichungstag der Anmeldung: 28.10.1998
(73) Patentinhaber: ROBERT BOSCH GMBH, 70442 Stuttgart (DE)
(72) Erfinder: KNECHT, Gerhard, D-76473 Iffezheim (DE)
(86) Internationale Anmeldenummer: DE9602324
(87) Internationale Veröffentlichungsnummer: WO9725224

(56) Entgegenhaltungen:
- EP-A- 0 666 199
- DE-A- 4 110 372
- US-A- 5 379 292
- Heintz, F.; Bremer, W.:"Advanced engineering measurement and information systems of future vehicle wiring systems - multiplex"; IMechE 1989, C 391/035, Seiten 213-222

## Beschreibung

Die Erfindung betrifft eine Schaltungsanordnung für ein Kraftfahrzeug mit den im Oberbegriff des Anspruchs 1 genannten Merkmalen.

### Stand der Technik

Es ist bekannt, in einem Kraftfahrzeug eine Vielzahl von Funktionsmodulen anzuordnen. Diese Funktionsmodule werden üblicherweise in verschiedene Gruppen eingeteilt, die beispielsweise einerseits dem Motormanagement und andererseits einer sogenannten Karosserieelektronik zugeordnet werden können. Weiterhin können Funktionsmodule vorgesehen sein, die ausschließlich einer besonderen Ausstattung eines Kraftfahrzeuges, beispielsweise Radio, Autotelefon, Navigationssysteme usw. dienen. Zum Datenaustausch und zur Ansteuerung der einzelnen Funktionsmodule ist es bekannt, die Funktionsmodule einer Gruppe mit einem Bussystem, beispielsweise einem CAN-Bus zu verbinden, so daß mittels der sogenannten Multiplextechnik, das heißt, eine Mehrfachausnutzung eines Leitungsweges, die Ansteuerungen realisiert werden können. Um die einzelnen Funktionsmodule untereinander mit denen für sie relevanten Daten versorgen zu können, ist es bekannt, die einzelnen Bussysteme in einem gemeinsamen Gateway, das heißt in einen Rechnerverbund von den einzelnen Bussystemen zugeordneten Rechnern, zusammenzuschalten. Dieses Gateway übernimmt beispielsweise die Freigabe der einzelnen Bussysteme für eine Informationsübertragung, beziehungsweise legt Prioritäten der Informationsübertragung und/oder eines Informationsaustausches zwischen den Informationssystemen fest.

Aus dem Artikel Heintz, F.; Bremer, W.: "Advanced engineering measurement and information systems of future vehicle wiring systems-multiplex", IMechE 1989, C 391/035, Seiten 213 bis 222, ist ein derartiges Gateway bekannt. Hierbei ist das gemeinsame Gateway in einer aus einer Steuereinheit und einem Fahrerinformationsmodul bestehenden Zentraleinheit realisiert. Hierbei ist nachteilig, daß die Zentraleinheit unabhängig von dem Vorhandensein beziehungsweise Nichtvorhandensein verschiedener Funktionsmodule im Kraftfahrzeug einen standardisierten Aufbau besitzen muß, der einer Maximalanzahl der möglichen Funktionsmodule entspricht. Insbesondere das Fahrerinformationsmodul muß alle Anzeigen bereithalten, die gegebenenfalls aufgrund der gewählten Fahrzeugausstattung eigentlich nicht benötigt werden. Darüber hinaus ist nachteilig, daß für die Realisierung des Gateway zusätzlich zu den Rechnereinheiten der Zentraleinheit ein Rechner für das Gateway vorhanden sein muß.

Gemäß dem Oberbegriff des Anspruchs 1 ist aus der DE/A 41 10 372 A ein Multiplex-Übertragungssystem für Fahrzeuge bekannt, bei dem eine Vielzahl von Netzwerken über einen Gateway-Netzknoten über Übertragungsleitungen miteinander verbunden sind. Die Netzwerke bilden ein integriertes Netzwerk innerhalb eines Fahrzeugs. Eine Vielzahl von dezentralisierten Multiplex-Übermittlungsnetzwerken sind miteinander über Gateway-Netzknoten (Netzknoten bzw. Netzwerkknoten mit Verbindungsrechner zwischen unterschiedlichen Netzwerken) verbunden. Bei den Netzwerken kann es sich beispielsweise um ein Steuersystem-Netzwerk, ein "Körpersystem"-Netzwerk sowie ein Fahrzeug-Sondernetzwerk zur Fehlerdiagnose handeln.

### Vorteile der Erfindung

Die erfindungsgemäße Schaltungsanordnung mit den im Anspruch 1 genannten Merkmalen bietet demgegenüber den Vorteil, daß eine flexible Anpassung der Zentraleinheit an einen bestimmten Ausstattungsgrad eines Kraftfahrzeuges möglich ist und ein gemeinsames Gateway über die Zentraleinheit ohne zusätzlichen Rechner möglich ist. Dadurch, daß die Zentraleinheit mit einem Fahrerinformationsmodul eine Baueinheit bildet, wobei die Zentraleinheit mit dem Fahrerinformationsmodul vorzugsweise lösbar verbindbar ist, ein erstes Bussystem an der Zentraleinheit angeschlossen ist, ein zweites Bussystem an dem Fahrerinformationsmodul angeschlossen ist, das Gateway durch einen Verbund eines in der Zentraleinheit und erst in dem Fahrerinformationsmodul angeordneten Rechner realisiert wird, wobei diese über eine Schnittstelle, vorzugsweise eine serielle Schnittstelle, miteinander verbunden sind, ist es vorteilhaft möglich, mittels der in beiden Teilen, also der Zentraleinheit oder dem Fahrerinformationsmodul, sowieso vorhandenen Rechner die Gatewayfunktionen für alle Bussysteme wahrzunehmen, wobei über die vorgesehene Schnittstelle die Rechner kommunizieren können. Insofern kann also in einfacher Weise auf die Anordnung eines zusätzlichen Mikrorechners zur Durchführung der Gateway-Funktionen in der Zentraleinheit und/oder dem Fahrerinformationsmodul verzichtet werden, da der Verbund der in beiden Teilen vorhandenen Rechner über die Schnittstelle die notwendigen Funktionen mitübernehmen können.

Vorteilhafte Ausgestaltungen der Erfindung ergeben sich aus den in den Unteransprüchen genannten Merkmalen.

### Zeichnung

Die Erfindung wird nachfolgend in einem Ausführungsbeispiel anhand der zugehörigen Zeichnung, die schematisch in einem Blockschaltbild die erfindungsgemäße Schaltungsanordnung zeigt, näher erläutert.

### Beschreibung des Ausführungsbeispiels

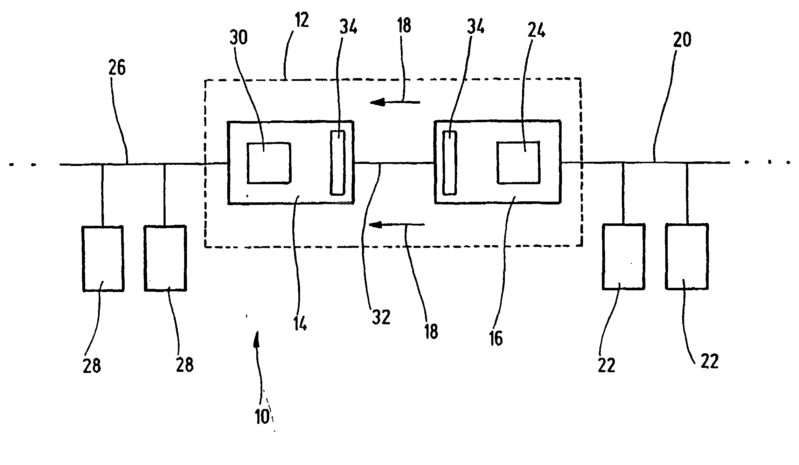

Die Figur zeigt eine insgesamt mit 10 bezeichnete Schaltungsanordnung für die Verschaltung von noch zu erläuternden Funktionsmodulen eines nicht dargestellten Kraftfahrzeuges. Kernstück der Schaltungsanordnung 10 ist eine Zentraleinheit 12, die aus einem Zentralelektrikmodul 14 und einem Fahrerinformationsmodul 16 besteht. Auf eine detaillierte Darstellung des Zentralelektrikmoduls 14 und des Fahrerinformationsmodul 16, beispielsweise auf die Darstellung einzelner Anzeigen und einzelner elektronischer beziehungsweise elektrischer Bauelemente, wurde aus Gründen der Übersichtlichkeit verzichtet.

Das Zentralelektrikmodul 14 und das Fahrerinformationsmodul 16 sind über geeignete Verbindungen, beispielsweise Rastverbindungen, lösbar miteinander verbindbar. Durch die angedeuteten Pfeile 18 soll verdeutlicht werden, daß das Zentralelektrikmodul 14 mit dem Fahrerinformationsmodul 16 zu der Zentraleinheit 12 mechanisch zusammengefügt werden kann.

Das Fahrerinformationsmodul 16 ist mit einem ersten Bussystem 20, beispielsweise einem high-Speed-CAN-Bus verbunden, an den einzelne Funktionsmodule 22 eines Motormanagements des Kraftfahrzeuges angeschlossen sind. Die Funktionsmodule 22 können beispielsweise eine Motoreinspritzung, eine Zündung, eine Getriebekontrolle usw. sein. Zur Ansteuerung der Funktionsmodule 22 über das Bussytem 20 besitzt das Fahrerinformationsmodul 16 eine Rechnereinheit 24, über die ein Datentransfer über das Bussystem 20 in allgemein bekannter Weise realisiert wird.

An das Zentralelektrikmodul 14 ist ein zweites Bussystem 26, beispielsweise ein CAN-Bus, angeschlossen. Mit dem Bussystem 26 sind einzelne Funktionsmodule 28 der sogenannten Karosserieelektronik, wie beispielsweise Lichteinheiten, Zentralverriegelung, Klimaanlage, elektrische Sitzverstellung usw., angeschlossen. Zur Organisation des Datentransfers über das Bussystem 26 besitzt das Zentralelektrikmodul 14 eine Rechnereinheit 30.

Neben der mechanischen Verbindung des Zentralelektrikmoduls 14 mit dem Fahrerinformationsmodul 16 ist eine elektrische Verbindung über eine serielle oder parallele Schnittstelle 32 vorgesehen. Die Schnittstelle 32 kann als Steckverbindung ausgebildet sein, wobei den Rechnereinheiten 24 beziehungsweise 30 jeweils ein serieller oder paralleler Eingabe-Ausgabe-Schaltkreis 34 zugeordnet ist, über die ein Datenaustausch der Rechnereinheiten 24 und 30 über die Schnittstelle 32 organisiert wird.

Die in der Figur gezeigte Schaltungsanordnung 10 übt folgende Funktion aus:

Beim bestimmungsgemäßen Einsatz der Zentraleinheit 12 erfolgt über die Rechnereinheit 24 des Fahrerinformationsmoduls 16 eine Ansteuerung des Bussystems 20, während über die Rechnereinheit 30 des Zentralelektrikmoduls 14 eine Ansteuerung des Bussystems 26 erfolgt. Durch die Entkopplung der Bussysteme 20 und 26 kann ein jeweils optimaler Datentransfer auf dem jeweiligen Bussystem 20 beziehungsweise 26 durchgeführt werden. Da das Bussystem 20 beispielsweise ein High-Speed-CAN-Bus ist, das heißt, über die Funktionsmodule 22 werden viele Daten des Motormanagements mit hoher Wiederholrate bereitgestellt, erfolgt durch die Entkopplung keine Beeinflussung des Datentransfers auf dem Bussystem 26, bei dem die Funktionsmodule 28 Daten mit einer niedrigeren Wiederholrate bereitstellen beziehungsweise Daten erhalten. Ein unbedingt notwendiger Datenaustausch zwischen einzelnen Funktionsmodulen 28 des Bussystems 26 und Funktionsmodulen 22 des Bussystems 20 erfolgt über die Schnittstelle 32, über die die Rechnereinheiten 24 und 30 miteinander kommunizieren. Über diese Verbindung kann somit die Gateway-Funktion zwischen den Bussystemen 20 und 26 realisiert werden.

Durch den modulartigen Aufbau der Zentraleinheit 12 ist ein Austausch des Zentralelektrikmoduls 14 und/oder des Fahrerinformationsmoduls 16 ohne weiteres möglich. Diese Module können so beispielsweise dem tatsächlichen Ausstattungsgrad des Kraftfahrzeuges in einfacher Weise angepaßt werden. Die jeweils ausgetauschten Module werden über die Schnittstelle 32, wobei sowohl das verbleibende Modul als auch das ausgetauschte Modul selbstverständlich die entsprechenden Eingabe-Ausgabeschaltkreise 34 sowie die Rechnereinheiten 24 beziehungsweise 30 aufweisen, elektrisch miteinander verbunden. Hierdurch wird der notwendige Datenaustausch zwischen den Bussystemen 20 beziehungsweise 26 und die Gateway-Funktion bei jeder möglichen Konfiguration der Zentraleinheit 12 sichergestellt.

## Patentansprüche

1. Schaltungsanordnung für ein Kraftfahrzeug, mit Funktionsmodulen (22, 28), die mit einer Spannungsversorgung und über wenigstens zwei Bussysteme (20, 26) mit einem gemeinsamen Gateway verbunden sind, der über eine Zentraleinheit (12) realisiert ist, **dadurch gekennzeichnet, daß** die Zentraleinheit (12) ein Zentralelektrikmodul (14) und ein Fahrerinformationsmodul (16) aufweist, ein erstes Bussystem (20) an dem Fahrerinformationsmodul (16) angeschlossen ist, ein zweites Bussystem (26) an dem Zentralelektrikmodul (14) angeschlossen ist, und das Gateway von einem Verbund von jeweils in dem Fahrerinformationsmodul (16) und dem Zentralelektrikmodul (14) angeordneten Rechnereinheiten (24, 30) realisiert ist und diese über eine Schnittstelle (32) zum Datenaustausch miteinander verbunden sind.

2. Schaltungsanordnung nach Anspruch 1, **dadurch gekennzeichnet, daß** die Schnittstelle (32) eine serielle oder parallele Schnittstelle ist.

3. Schaltungsanordnung nach Anspruch 2, **dadurch gekennzeichnet, daß** die Schnittstelle (32) über eine Steckverbindung realisiert wird.

4. Schaltungsanordnung nach einem der vorhergehenden Ansprüche, **dadurch gekennzeichnet, daß** das Zentralelektrikmodul (14) und das Fahrerinformationsmodul (16) lösbar miteinander verbunden sind.

5. Schaltungsanordnung nach einem der vorhergehenden Ansprüche, **dadurch gekennzeichnet, daß** die Bussysteme (20, 26) unterschiedliche Übertragungsraten aufweisen.

## Claims

1. Circuit arrangement for a motor vehicle, having functional modules (22, 28) which are connected to a voltage supply and to a common gateway via at least two bus systems (20, 26), which gateway is implemented by means a central processor unit (12), **characterized in that** the central processor unit (12) has a central electrical module (14) and a driver information module (16), a first bus system (20) is connected to the driver information module (16), a second bus system (26) is connected to the central electrical module (14), and the gateway is implemented by means of a group of computer units (24, 30) which are arranged in the driver information module (16) and the central electrical module (14), and the latter are connected to one another via an interface (32) in order to exchange data.

2. Circuit arrangement according to Claim 1, **characterized in that** the interface (32) is a serial or parallel interface.

3. Circuit arrangement according to Claim 2, **characterized in that** the interface (32) is implemented by means of a plug-type connection.

4. Circuit arrangement as claimed in one of the preceding claims, **characterized in that** the central electrical module (14) and the driver information module (16) are detachably connected to one another.

5. The circuit arrangement as claimed in one of the preceding claims, **characterized in that** the bus systems (20, 26) have different transmission rates.

## Revendications

1. Circuit de véhicule automobile comportant des modules fonctionnels (22, 28) reliés par une alimentation en tension et par au moins deux systèmes de bus (20, 26) à une porte commune réalisée par une unité centrale (12),
**caractérisé en ce que**
l'unité centrale (12) comprend un module électrique central (14) et un module d'informations de conducteur (16),
- un premier système de bus (20) auquel est relié le module d'informations de conducteur (16),
- un second système de bus (26) auquel est relié le module électrique central (14) et
la porte est formée par une combinaison d'unités de calcul (24, 30) prévues respectivement dans le module d'informations de conducteur (16) et dans le module électrique central (14), et ces unités de calcul sont reliées par une interface (32) pour l'échange de données.

2. Circuit selon la revendication 1,
**caractérisé en ce que**
l'interface (32) est une interface série ou parallèle.

3. Circuit selon la revendication 2,
**caractérisé en ce que**
l'interface (32) est réalisée par une connexion.

4. Circuit selon l'une quelconque des revendications précédentes,
**caractérisé en ce que**
le module électrique central (14) et le module d'informations de conducteur (16) sont reliés de manière amovible.

5. Circuit selon l'une quelconque des revendications précédentes,
**caractérisé en ce que**
les systèmes de bus (20, 26) ont des vitesses de transmission différentes.
